# EUROPEAN PATENT SPECIFICATION

(11) **EP 2 365 918 B1**
(45) Date of publication and mention of the grant of the patent: **23.07.2014**
(21) Application number: 09768394.0
(22) Date of filing: 14.12.2009
(51) Int. Cl.: B60L 11/18

(54) **Method for operating an electric vehicle**
Betriebsverfahren für Elektrofahrzeuge
Procédé d'utilisation d'un véhicule électrique

(30) Priority: 15.12.2008 GB 0822781
(43) Date of publication of application: 21.09.2011
(73) Proprietor: Tennant N.V., 5405 AB Uden (NL)
(72) Inventor: RIACH, Alan, West Lothian EH48 1EE (GB)
(74) Representative: Jones, John Bryn
(86) International application number: PCT/EP2009/067071
(87) International publication number: WO 2010/069916

(56) References cited:
- EP-A1- 0 807 546
- DE-A1- 4 028 242
- US-A1- 2008 054 870

## Description

The present invention relates to a method for connecting two batteries in parallel with a load, in particular two batteries which are mounted on a vehicle and which supply power to propel the vehicle and to perform other functions of the vehicle.

In particular the vehicle may be a cleaning machine.

Cleaning machines, in particular road cleaning machines, or road sweeping machines are known. The term "road cleaning" and "road sweeping" are used broadly to include cleaning and sweeping of other areas such as pedestrian precincts, footpaths, car parks etc. Road cleaning machines are machines for lifting dirt off the road and into a hopper. Road sweeping machines are road cleaning machines that are designed to brush the dirt off the road, generally towards or into a hopper. In many a road sweeping machines a suction pipe (or hose) along with a ground following suction nozzle is provided for sucking swept dirt from the road, and to act as a conduit for passing such dirt up into a hopper. A road cleaning machine can, however, just comprise a suction pipe and the hopper, i.e. no sweeping mechanism. A cab is provided for the operator at the front of the vehicle so as to give a good view of the area to be swept.

A related method for operating an electric vehicle is known from EP 807 546 A1.

An internal combustion engine provides motor power and also power to drive the brushes, suction fan and other devices.

### Summary of Invention

Rather than using an internal combustion engine, batteries can be used to power the vehicle.

For the avoidance of doubt, the term "battery" means a single electric cell, or a plurality of electric cells connected in series.

When it is required to connect two or more batteries in parallel with a load, then the state of charge of the two batteries must be the same otherwise damage to either battery or both batteries may occur. Thus, if a first battery has a higher state of charge than a second battery and both batteries are connected in parallel then current will flow from the battery having a higher state of charge into the battery having a lower state of charge in a violent and uncontrolled way. This runs the risk of causing damage to either of the batteries and also causing damage to the interconnecting circuitry.

There is therefore a requirement for connecting two batteries in parallel in a safe manner that will not cause damage to any of the batteries or associated components.

Thus, according to the present invention there is provided a method of operating an electric vehicle including the steps of:
(1) providing the electric vehicle
(2) providing an electric load device on the electric vehicle
(3) providing a first battery on the electric vehicle with a first state of charge
(4) providing a second battery on the electric vehicle with a second state of charge lower than the first state of charge
(5) determining an initial state of charge of the first battery
(6) determining an initial state of charge of the second battery
(7) connecting the first battery to the electric load device
(8) measuring the current flow from the first battery
(9) calculating an instantaneous state of charge of the first battery
(10) comparing the instantaneous state of charge of the first battery with the initial state of charge of the second battery, and
(11) when the instantaneous state of charge of the first battery reaches a predetermined percentage of the initial state of charge of the second battery, connecting the second battery in parallel with the first battery.

Advantageously, when such a method is used with battery powered vehicles that are used for shift work and require a fresh set of batteries at the beginning of each shift, the fresh batteries can be mounted on the vehicle and connected in a safe manner.

The invention will now be described, by way of example only, with reference to the accompanying drawings in which:-
Figure 1 is an isometric view of a cleaning machine operated in accordance with the present invention, and
Figure 2 is a circuit diagram of part of the cleaning machine of figure 1.

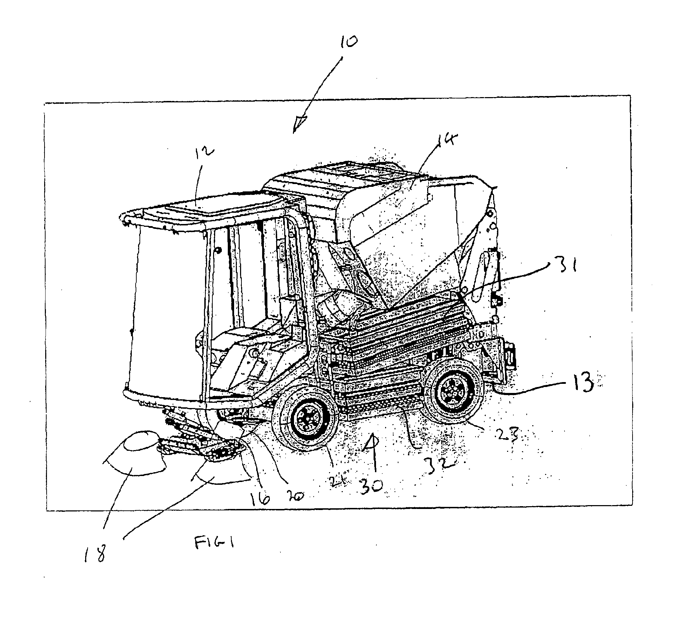

With reference to figure 1 there is shown a cleaning machine, in this case a sweeping machine 10. The sweeping machine includes an enclosed cab 12, a hopper 14, a suction nozzle 16 and brushes 18. The sweeping machine includes a front right wheel 20, a front left wheel 21, a rear right wheel (not shown) and a rear left wheel 23. The wheels support a chassis 13. The front wheels are steerably mounted on the chassis and the rear wheels are non-steerably mounted on the chassis.

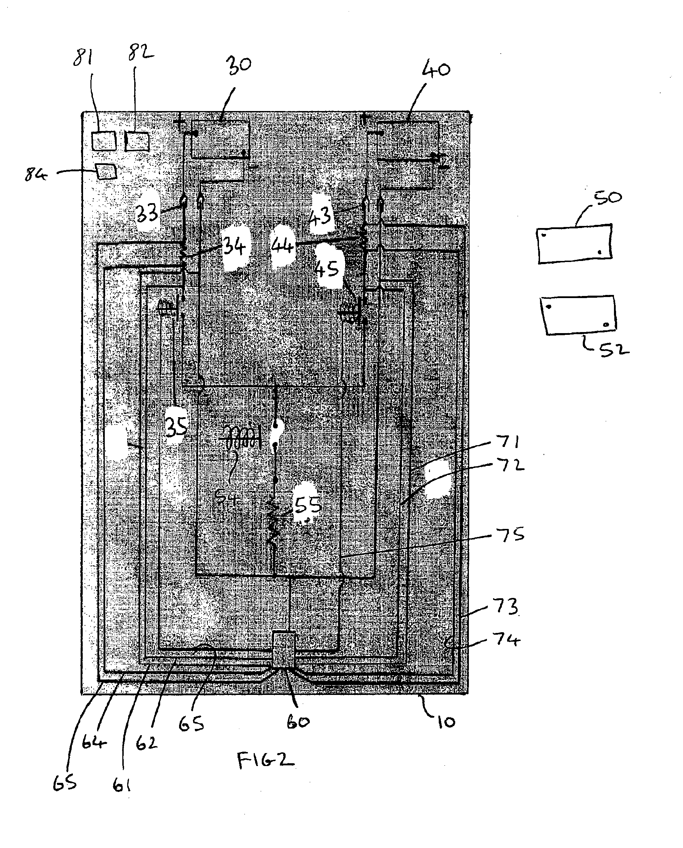

The rear wheels can be selectively driven in a forward or reverse direction by an electric motor 55 (situated between the rear wheels (not shown on figure 1 but see figure 2)). The brushes can be selectively driven by another electric motor (not shown). A fan (not shown) which acts to suck dirt through such a nozzle 16 is driven by a further electric motor (not shown).

Mounted on the left of the vehicle is a first battery pack 30 having an upper compartment 31 and a lower compartment 32. The upper compartment contains a total of fourteen electric cells and the lower compartment contains a total of nine electric cells. The battery pack therefore contains a total of twenty three electric cells. These electric cells are all connected in series with each other. Electric cells are lithium ion cells which each produce a nominal voltage of 3.2 volts, the first battery pack therefore providing a nominal voltage of 73.6 volts. The first battery pack 30 constitutes a first battery according to the present invention (see especially figure 2). Mounted on the right side of the vehicle is a second battery pack which constitutes a second battery according to the present invention. The second battery pack 40 is similar to the first battery pack 30 in as much as it includes an upper compartment with fourteen lithium ion cells and a lower compartment with nine lithium iron cells, all twenty three cells being connected in series to constitute a second battery according to the present invention (see Figure 2).

It is possible to use the sweeping machine 10 on a shift basis, i.e. a first operator uses the cleaning machine to clean roads etc for a first eight hour shift and then a second operator takes over the cleaning machine ands uses it for a second eight hour shift.

However, the total power available from a fully charged first and second battery pack is only sufficient for a single shift. Thus, at the end of the first shift the depleted first battery 30 and second battery 40 are removed from the vehicle and replaced with a fully charged third battery 50 and fourth battery 52. The third and fourth batteries are identical in construction to the first and second batteries respectively and, being fully charged, will allow the second shift to be completed without running out of power. Whilst second shift is being completed the first and second batteries can be recharged. Upon completion of the second shift the third and fourth batteries can be removed from the cleaning machine and replaced with now fully charged first and second batteries in order to complete a third shift. By utilising the time of the second shift to recharge the first and second batteries ensures that they can be recharged slowly and carefully without damage.

By connecting the first and second batteries in parallel ensures that the operating voltage of the vehicle is 73.6 volts. If the first and second batteries were connected in series, then the operating voltage of the vehicle would need to be 147.2 volts and components, such as motors, operating at these voltages are more expensive than similar motors in components operating at 73.6 volts. Accordingly, by connecting both batteries in parallel, sufficient power can be provided to complete a shift, whilst ensuring that cheaper components operating at a nominal voltage of 73.6 volts can be used.

When the first and second battery packs are connected at the start of the first shift whilst they would nominally both be fully charged, it is almost inevitable that one battery (for the sake of argument the first battery) will have a higher state of charge than the other battery (for the sake of argument the second battery). If these two batteries were connected together then, as described above, damage may ensue.

Figure 2 shows a circuit that will allow the first and second batteries to be connected. A first circuit associated with the first battery can be defined as follows:-

Starting from the positive terminal of the first battery 30, it is connected via a plug and socket fitting 33 to one side of a shunt resistor 34. The other side of the shunt resistor 34 is connected to one side of a switch 35. The other side of the switch 35 is connected to one side of a motor starter switch 54. The other side of the motor starter switch 54 is connected to a motor 55. The other side of the motor 55 is connected via the plug and socket kit fitting 33 to the negative terminal of the first battery pack.

A computer 60 has sensing wires 61 and 62 which sense the voltage across the terminals of battery 30. The computer also is connected to sensing wires 63 and 64 enabling the computer to detect the voltage drop across the shunt resistor 34. The computer 60 is also connected to the switch 35 via wire 65.

Components 33, 34, 35, 61, 62, 63, 64 and 65 have equivalent features in respect of the second battery 40 as shown at 43, 44, 45, 71, 72, 73, 74 and 75 respectively.

A second circuit associated with the second battery is defined by components 43, 44, 45, 54, 55 and associated wiring.

The method of connecting the first and second batteries to the cleaning machine 10 is as follows.

It is assumed that the first and second batteries 30 and 40 are both nominally fully charged. Both batteries are electrically disconnected from the cleaning machine and are physically disconnected from the cleaning machine, i.e. both batteries have been demounted from the cleaning machine. As an initial step, the first battery 30 is mounted on the left hand side of the vehicle as shown in figure 1 and the second battery 40 is mounted on the right hand side of the vehicle.

Note from figure 2 that switches 35, 45 and 54 are all open.

The first battery 30 is electrically connected via the plug and socket fitting 33 to the first circuit and the second battery 40 is electrically connected by a plug and socket fitting 43 to the second circuit. At this stage the first and second batteries are not under any load, i.e. no current is flowing. The sensing wires 61 and 62 allow the computer to determine the state of charge of the first battery 30. This is done by sensing the no load voltage across the battery terminals of battery 30. Similarly, the computer 60 can determine the state of charge of the second battery 40 by measuring the no load voltage across its terminals via sensing wires 71 and 72.

The computer can then determine which of the first and second batteries has a higher state of charge, and by how much. For the sake of the present example, it is assumed that first battery pack 30 has a higher state of charge than the second battery pack 40. Once the computer has made this determination, then the switch 35 or 45 associated with the battery having the higher state of charge is closed, in this example switch 35 is closed. At this stage, because switch 54 is still open, no electric load is applied to the battery 30. When it is required to use the vehicle, then motor 55 will be started by closing switch 54 thereby propelling the vehicle. As soon as switch 54 is closed a voltage drop will appear across the terminals of the shunt resistor 34 which voltage drop can be measured by the computer via wires 63 and 64. The computer can then determine (by knowing the value of the shunt resistance) the instantaneous current being drawn from the first battery 30. The state of charge in battery 30 will start to fall and the computer can calculate the instantaneous (or ongoing) state of charge of the first battery by measuring the amount of current flowing from the battery. The computer can then compare the instantaneous state of charge of the first battery with the initial state of charge of the second battery. When the instantaneous state of charge of the first battery reaches a predetermined percentage of the initial state of charge of the second battery then the second battery can be connected in parallel with the first battery by closing switch 45. Preferably, switch 45 is closed when the state of charge of the first battery reaches 100% of the initial state of charge of the second battery. Under these circumstances the state of charge of both batteries is identical and therefore connecting both batteries in parallel does not cause any damage to either the batteries or the associated circuitry.

Whilst ideally the state of charge of both batteries is identical when they are connected, clearly small variations in the state of charge of the batteries can be accommodated without causing damage to either the batteries or the associated circuitry. Thus the predetermined percentage might be between 100.1% and 99.9%. Alternatively the predetermined percentage might be between 100.5% and 99.5%. Alternatively the predetermined percentage might be between 101% and 99%. Alternatively the predetermined percentage might be between 105% and 95%.

As shown in figure 2, all components other than the third battery 50 and fourth battery 52 are mounted on the vehicle. As such, as soon as the batteries 30 and 40 are mounted on the vehicle and have been electrically connected and as soon as the computer has determined which of batteries 30 or 40 has the higher state of charge and has closed the appropriate switch 35 or 45, then the vehicle can be used and as such the turn around time between shifts is minimised.

It will be appreciated that in the event that the second battery 40 has a higher state of charge than the first battery 30, then switch 45 will be closed in preference to switch 35, and switch 35 will only be closed when the instantaneous state of charge of battery 40 is determined to have fallen to a predetermined percentage of the initial state of charge of battery 30.

When the vehicle 10 as shown in figure 2 is being used and is being powered by first battery 30 and second battery 40, the third battery 50 and fourth battery 52 can be recharged. At the end of the first shift the first and second batteries can be electrically disconnected and physically demounted from the vehicle 10 and can be replaced by the third battery 50 and a fourth battery 52 respectively. The manner in which the third and fourth batteries are then connected to the load is as described for connecting the first and second batteries. Whilst the vehicle is being used with the third and fourth batteries, the first and second batteries can be recharged and at the end of the second shift batteries can again be swapped so that the third shift uses the first and second batteries.

Note that by matching the state of charge of batteries whilst they are on the vehicle, it is possible to use the energy required to match the state of charge of both batteries to carry out useful work, in this example to propel the vehicle.

As shown in figure 2 the electric load device used to discharge the battery having the higher initial state of charge is the motor 55. Alternatively, other motors or other load devices could be used, such as the motor described above to drive the brushes 18, the motor described above to drive the fan, or any other motor of the vehicle. Additionally, or alternatively, any other electrically powered piece of equipment could be used to drain the battery having the higher initial state of charge. For example various lights commonly found on the vehicle could be used.

As described above, the current flowing from the battery with the initial highest state of charge is calculated by measuring the voltage drop across shunt resistor 34 or 44. In an alternative embodiment, the measurement of current could be carried out by any other suitable means.

Switches 35, 45 and 54 are shown as mechanical switches, i.e. switches wherein contact between terminals is made and broken. Any type of mechanical switch can be used. Furthermore, a type of non-mechanical switch, such as a metal oxide semiconductor field effect transistor (MOSFET) switch could be used.

Advantageously, the switches 35 and 45 can be arranged to be opened upon disconnection of one or other or both of the first and second batteries. For example, where switches 35 and 45 are mechanical switches they can be sprung loaded to an open position and closed by feeding power to an associated solenoid. Once the batteries 30 and 40 have been disconnected then power will no longer be fed to the solenoids and the switches 35 and 45 will automatically spring to the open position.

Advantageously, it is useful to be able to display the state of charge of the first battery and also to be able to display this state of charge of the second battery. Thus, the cleaning machine 10 includes a first display 81 which displays the state of charge of the first battery pack 30 and a second display 82 which displays the state of charge of the second battery pack 40. Preferably the first and second displays are visible to an operator using the cleaning machine, i.e. they are visible to the operator when the cleaning machine is being used for cleaning purposes and during transportation to and from a site to be cleaned. Typically the displays 81 and 82 will be in the cab 12. Typically each display will display the state of charge of the associated battery in terms of a fraction of the maximum state of charge of the battery. The displays can be likened to information given by fuel gauges on automobiles and the like. A full state of charge equates to the energy capacity (or fuel capacity) of the vehicle being "full". When the state of charge of the battery reduces to a predetermined level (not necessarily a zero state of charge) the display can indicate "empty". The display can be via a rotating needle. Alternatively the display may be colour coded, green indicating a relatively high state of charge and red indicating a relatively low state of charge.

Advantageously, by providing displays, one for each battery pack, an indication of the total electrical energy available is given. Furthermore, under normal circumstances, once both batteries have been connected in parallel, the operator would normally expect the state of charge of each battery to reduce at the same rate, and hence the displays to indicate approximately the same amount of state of charge for each battery. In the event that one display indicated a different state of charge to the other, then this is an indication to the operator that there is a fault in the system.

Having two displays can also help to detect improper maintenance. For example, at the end of the shift, the first and second battery packs will be removed and, under normal circumstances will be replaced with fully charged third and fourth battery packs. However inadvertently, the wrong battery may be replaced, for example once the first and second batteries have been removed, the operator may inadvertently muddle up the third battery with a first battery and then replace the first battery on the vehicle. If the operator then correctly replaces the fourth battery onto the vehicle the display 81 will display a low state of charge whereas the display 82 will display a high state of charge. A significant difference in the state of charge displayed by displays 81 and 82 once the batteries have been replaced indicates a problem. Advantageously, when the state of charge of the two battery packs on the vehicle differs by more than a predetermined amount, for example where the state of charge of the two batteries differs by more than 10% then a warning device 84 can be arranged to indicate this to the operator. Preferably the warning device 84 is a light, and preferably the light is visible to the operator when operating the vehicle e.g. when seated in the cab. Alternatively, or additionally, the warning device 84 could be an audible warning device such as a buzzer and preferably the audible warning device is audible by the operator when operating the vehicle e.g. when seated in the cab.

## Claims

1. A method of operating an electric vehicle including the steps of:
(1) providing the electric vehicle
(2) providing an electric load device on the electric vehicle
(3) providing a first battery on the electric vehicle with a first state of charge
(4) providing a second battery on the electric vehicle with a second state of charge lower than the first state of charge
(5) determining an initial state of charge of the first battery
(6) determining an initial state of charge of the second battery
(7) connecting the first battery to the electric load device
(8) measuring the current flow from the first battery
(9) calculating an instantaneous state of charge of the first battery
(10) comparing the instantaneous state of charge of the first battery with the initial state of charge of the second battery, and
(11) when the instantaneous state of charge of the first battery reaches a predetermined percentage of the initial state of charge of the second battery, connecting the second battery in parallel with the first battery.

2. A method as defined in claim 1 including the steps of:
(12) providing a first circuit on the electric vehicle with a first switch in an open position
(13) providing a second circuit on the electric vehicle with a second switch in an open position
(14) connecting the first battery to the first circuit
(15) connecting the second battery to the second circuit
(16) carrying out steps 5 and 6 of claim 1
(17) carrying out steps 7 of claim 1 by closing the first switch
(18) carrying out steps 8, 9 and 10 of claim 1
(19) carrying out step 11 of claim 1 by closing the second switch.

3. A method as defined in claim 1 or 2 in which step 5 includes measuring the voltage of the first battery and step 6 includes measuring the voltage of the second battery.

4. A method as defined in any preceding claim including the step of providing a computer on the electric vehicle to carry out one or more of steps 5, 6, 7, 8, 9, 10 and 11.

5. A method as defined in claim 4 when dependent upon claim 2 wherein step 17 is carried out upon receipt of a signal from the computer and/or step 19 is carried out upon receipt of a signal from the computer.

6. A method as defined in any preceding claim wherein the electric load device is a motor.

7. A method as defined in claim 6 wherein the motor operates to propel the vehicle and/or to drive a fan on the vehicle and/or to drive a brush of the vehicle.

8. A method as defined in claim 1 wherein the electric load device of step 2 is a motor
the method comprising mounting the first and second batteries on the electric vehicle to complete steps 3 and 4,
then, after step 11, at least partially depleting the first and second batteries, then, disconnecting the first and second batteries and demounting them from the electric vehicle,
then providing a third and fourth battery, mounting the third and fourth batteries on the electric vehicle in place of the first and second batteries, and connecting the third and fourth batteries in parallel with the load as per the steps of claim 1 for connecting the first and second batteries.

9. A method as defined in claim 8 in which all steps are carried out within a 24 hour period.

10. A method as defined in any preceding claim wherein an instantaneous state of charge of the first battery is displayed on a first display and an instantaneous state of charge of the second battery is displayed on a second display.

11. A method as defined in claim 10 wherein the instantaneous state of charge of the first battery is displayed in terms of a fraction of the maximum state of charge of the first battery and/or the instantaneous state of charge of the second battery is displayed in terms of a fraction of the maximum state of charge of the second battery.

12. A method as defined in claim 10 or 11 wherein the first and second displays are visible to an operator when operating the electric vehicle.

13. A method as defined in any preceding claim wherein if an initial state of charge of the first battery differs from initial state of charge of the second battery by more than a predetermined amount a warning device provides a warning.

14. A method as defined in claim 13 wherein the warning device is visible and/or audible to an operator when operating the electric vehicle.

## Patentansprüche

1. Betriebsverfahren für Elektrofahrzeuge, umfassend die Schritte:
(1) Bereitstellen des Elektrofahrzeugs,
(2) Bereitstellen einer elektrischen Last auf dem Elektrofahrzeug,
(3) Bereitstellen einer ersten Batterie auf dem Elektrofahrzeug mit einem ersten Ladezustand,
(4) Bereitstellen einer zweiten Batterie auf dem Elektrofahrzeug mit einem zweiten Ladezustand, der niedriger als der erste Ladezustand ist,
(5) Feststellen eines Anfangsladezustands für die erste Batterie,
(6) Feststellen eines Anfangsladezustands für die zweite Batterie,
(7) Anschließen der ersten Batterie an die elektrische Last,
(8) Messen des Stroms von der ersten Batterie,
(9) Berechnen des augenblicklichen Ladezustand der ersten Batterie,
(10) Vergleichen des augenblicklichen Ladezustand der ersten Batterie mit dem Anfangsladezustand der zweiten Batterie und
(11) Anschließen der zweiten Batterie parallel zur ersten Batterie, wenn der augenblickliche Ladezustand der ersten Batterie einen vorbestimmten Prozentwert des Anfangsladezustands der zweiten Batterie erreicht.

2. Verfahren nach Anspruch 1, umfassend die Schritte:
(12) Bereitstellen eines ersten Stromkreises auf dem Elektrofahrzeug mit einem Schalter in offener Stellung,
(13) Bereitstellen eines zweiten Stromkreises auf dem Elektrofahrzeug mit einem zweiten Schalter in offener Stellung,
(14) Anschließen der ersten Batterie an den ersten Stromkreis,
(15) Anschließen der zweiten Batterie an den zweiten Stromkreis,
(16) Ausführen der Schritte 5 und 6 nach Anspruch 1,
(17) Ausführen des Schritts 7 nach Anspruch 1 durch Schließen des ersten Schalters,
(18) Ausführen der Schritte 8, 9 und 10 nach Anspruch 1,
(19) Ausführen des Schritts 11 nach Anspruch 1 durch Schließen des zweiten Schalters.

3. Verfahren nach Anspruch 1 oder 2, wobei Schritt 5 die Messung der Spannung der ersten Batterie und Schritt 6 die Messung der Spannung der zweiten Batterie umfasst.

4. Verfahren nach einem der vorangehenden Ansprüche, umfassend den Schritt Bereitstellen eines Rechners auf dem Elektrofahrzeug, um einen oder mehrere der Schritte 5, 6, 7, 8, 9, 10 und 11 auszuführen.

5. Verfahren nach Anspruch 4, wenn er von Anspruch 2 abhängt, wobei Schritt 17 ausgeführt wird, wenn ein Signal vom Rechner empfangen wird und/oder Schritt 19 ausgeführt wird, wenn ein Signal vom Rechner empfangen wird.

6. Verfahren nach einem der vorangehenden Ansprüche, wobei die elektrische Last ein Motor ist.

7. Verfahren nach Anspruch 6, wobei der Motor zum Antrieb eines Fahrzeugs und/oder zum Antrieb eines Gebläses auf dem Fahrzeug und/oder zum Antrieb eines Besens des Fahrzeugs arbeitet.

8. Verfahren nach Anspruch 1 wobei die elektrische Last des Schritts 2 ein Motor ist,
wobei das Verfahren zum Ausführen der Schritte 3 und 4 das Befestigen der ersten oder zweiten Batterie auf dem Elektrofahrzeug,
dann, nach Schritt 11, das zumindest teilweise Entladen der ersten und der zweiten Batterie,
dann das Abkoppeln der ersten und der zweiten Batterie und das Abnehmen beider vom Elektrofahrzeug,
dann das Bereitstellen einer dritten und vierten Batterie, das Befestigen der dritten und vierten Batterie auf dem Elektrofahrzeug anstelle der ersten und zweiten Batterie und das parallele Anschließen der dritten und vierten Batterie an die Last gemäß den Schritten zum Anschließen der ersten und der zweiten Batterie nach Anspruch 1 umfasst.

9. Verfahren nach Anspruch 8, wobei alle Schritte innerhalb eines Zeitraums von 24 Stunden ausgeführt werden.

10. Verfahren nach einem der vorangehenden Ansprüche, wobei der augenblickliche Ladezustand der ersten Batterie auf einer ersten Anzeige und der augenblickliche Ladezustand der zweiten Batterie auf einer zweiten Anzeige angezeigt werden.

11. Verfahren nach Anspruch 10, wobei der augenblickliche Ladezustand der ersten Batterie als Bruchteil des maximalen Ladezustands der ersten Batterie und/oder der augenblickliche Ladezustand der zweiten Batterie als Bruchteil des maximalen Ladezustands der zweiten Batterie angezeigt werden.

12. Verfahren nach Anspruch 10 oder 11, wobei erste und zweite Anzeige beim Bedienen des Elektrofahrzeugs für den Bediener sichtbar sind.

13. Verfahren nach einem der vorangehenden Ansprüche, wobei eine Warnvorrichtung ein Warnsignal abgibt, wenn der Anfangsladezustand der ersten Batterie sich vom Anfangsladezustand der zweiten Batterie um mehr als einen vorbestimmten Betrag unterscheidet.

14. Verfahren nach Anspruch 13, wobei die Warnvorrichtung beim Bedienen des Elektrofahrzeugs für den Bediener sichtbar und/oder hörbar ist.

## Revendications

1. Procédé de fonctionnement d'un véhicule électrique qui comprend les étapes qui consistent à :
(1) prévoir le véhicule électrique
(2) prévoir un dispositif de charge électrique sur le véhicule électrique
(3) prévoir une première batterie sur le véhicule électrique, avec un premier état de charge
(4) prévoir une seconde batterie sur le véhicule électrique, avec un second état de charge inférieur au premier état de charge
(5) déterminer un état de charge initial de la première batterie
(6) déterminer un état de charge initial de la seconde batterie
(7) relier la première batterie au dispositif de charge électrique
(8) mesurer l'intensité du courant depuis la première batterie
(9) calculer un état de charge instantané de la première batterie
(10) comparer l'état de charge instantané de la première batterie avec l'état de charge initial de la seconde batterie, et
(11) lorsque l'état de charge instantané de la première batterie atteint un pourcentage prédéterminé de l'état de charge initial de la seconde batterie, relier la seconde batterie en parallèle avec la première batterie.

2. Procédé selon la revendication 1, comprenant les étapes qui consistent à :
(12) prévoir un premier circuit sur le véhicule électrique, avec un premier commutateur en position ouverte
(13) prévoir un second circuit sur le véhicule électrique, avec un second commutateur en position ouverte
(14) relier la première batterie au premier circuit
(15) relier la seconde batterie au second circuit
(16) effectuer les étapes 5 et 6 de la revendication 1
(17) effectuer l'étape 7 de la revendication 1 en fermant le premier commutateur
(18) effectuer les étapes 8, 9 et 10 de la revendication 1
(19) effectuer l'étape 11 de la revendication 1 en fermant le second commutateur.

3. Procédé selon la revendication 1 ou 2, dans lequel l'étape 5 comprend la mesure de la tension de la première batterie, et l'étape 6 comprend la mesure de la tension de la seconde batterie.

4. Procédé selon l'une quelconque des revendications précédentes, comprenant l'étape consistant à prévoir un ordinateur sur le véhicule électrique afin d'effectuer une ou plusieurs des étapes 5, 6, 7, 8, 9, 10 et 11.

5. Procédé selon la revendication 4, lorsqu'elle dépend de la revendication 2, dans lequel l'étape 17 est effectuée lors de la réception d'un signal de la part de l'ordinateur, et/ou l'étape 19 est effectuée lors de la réception d'un signal de la part de l'ordinateur.

6. Procédé selon l'une quelconque des revendications précédentes, dans lequel le dispositif de charge électrique est un moteur.

7. Procédé selon la revendication 6, dans lequel le moteur fonctionne afin de propulser le véhicule et/ou afin d'entraîner un ventilateur situé sur le véhicule et/ou afin d'entraîner un balai du véhicule.

8. Procédé selon la revendication 1, dans lequel le dispositif de charge électrique de l'étape 2 est un moteur,
le procédé comprenant le montage des première et seconde batteries sur le véhicule électrique, afin de terminer les étapes 3 et 4,
puis, après l'étape 11, le vidage au moins partiel des première et seconde batteries,
puis, le débranchement des première et seconde batteries, et leur démontage du véhicule électrique,
puis, la prévision d'une troisième et d'une quatrième batteries, le montage des troisième et quatrième batteries sur le véhicule électrique à la place des première et seconde batteries, et le branchement des troisième et quatrième batteries en parallèle avec la charge, conformément aux étapes de la revendication 1 afin de brancher les première et seconde batteries.

9. Procédé selon la revendication 8, dans lequel toutes les étapes sont effectuées en 24 heures.

10. Procédé selon l'une quelconque des revendications précédentes, dans lequel un état de charge instantané de la première batterie est affiché sur un premier écran, et un état de charge instantané de la seconde batterie est affiché sur un second écran.

11. Procédé selon la revendication 10, dans lequel l'état de charge instantané de la première batterie est affiché sous forme d'une fraction de l'état de charge maximal de la première batterie, et/ou l'état de charge instantané de la seconde batterie est affiché sous forme d'une fraction de l'état de charge maximal de la seconde batterie.

12. Procédé selon la revendication 10 ou 11, dans lequel les premier et second écrans sont visibles pour un opérateur lorsqu'il utilise le véhicule électrique.

13. Procédé selon l'une quelconque des revendications précédentes dans lequel, si un état de charge initial de la première batterie diffère de l'état de charge initial de la seconde batterie au-delà d'une quantité prédéterminée, un dispositif d'alerte émet une alerte.

14. Procédé selon la revendication 13, dans lequel le dispositif d'alerte est visible et/ou audible pour un opérateur lorsqu'il utilise le véhicule électrique.
